# FASCICULE DE BREVET EUROPEEN

(11) **EP 3 419 757 B1**
(45) Date de publication et mention de la délivrance du brevet: **11.03.2020**
(21) Numéro de dépôt: 17707028.1
(22) Date de dépôt: 24.02.2017
(51) Int. Cl.: B01J 35/02, B01J 37/00, B82Y 30/00, C08F 112/14, H01M 4/88

(54) **PROCEDE DE PREPARATION DE PARTICULES APTES A CATALYSER LA REDUCTION DE L'OXYGENE OU L'OXYDATION DE L'HYDROGENE CONDUCTRICES DE PROTONS PAR GREFFAGE A LEUR SURFACE DE POLYMERES CONDUCTEURS DE PROTONS SPECIFIQUES**
VERFAHREN ZUR HERSTELLUNG PROTONENLEITENDER PARTIKEL ZUR KATALYSE DER SAUERSTOFFREDUKTION ODER WASSERSTOFFOXIDATION DURCH PFROPFUNG SPEZIFISCHER PROTONENLEITENDER POLYMERE AUF DIE OBERFLÄCHE DAVON
METHOD FOR PREPARING PROTON-CONDUCTING PARTICLES SUITABLE FOR CATALYSING OXYGEN REDUCTION OR HYDROGEN OXIDATION BY GRAFTING SPECIFIC PROTON-CONDUCTING POLYMERS TO THE SURFACE OF SAME

(30) Priorité: 26.02.2016 FR 1651632
(43) Date de publication de la demande: 02.01.2019
(73) Titulaire: Commissariat à l'énergie atomique et aux énergies alternatives, 75015 Paris (FR)
(72) Inventeur: BUVAT, Pierrick, 37250 Montbazon (FR); DRU, Delphine, 37250 Sorigny (FR); LOUBAT, Cédric, 34740 Vendargues (FR); CROUZET, Quentin, 34800 Octon (FR)
(74) Mandataire: Brevalex
(86) Numéro de dépôt international: PCT/EP2017/054376
(87) Numéro de publication internationale: WO 2017/144686

(56) Documents cités:
- WO-A2-2013/068319

## Description

### DOMAINE TECHNIQUE

La présente invention se rapporte à un procédé de préparation de particules aptes à catalyser la réduction de l'oxygène ou l'oxydation de l'hydrogène, ces particules étant, de plus, conductrices de protons grâce à une fonctionnalisation desdites particules avec des polymères organiques conducteurs de protons spécifiques.

Ces particules ont pour caractéristique de présenter une activité catalytique (notamment, pour l'oxydation de l'hydrogène ou la réduction de l'oxygène) tout en présentant une conductivité protonique.

De ce fait, ces particules trouvent leur application dans l'élaboration de matériaux d'électrodes, en particulier de matériaux destinés à entrer dans la constitution de couches catalytiques d'électrodes pour piles à combustible, telles que les piles fonctionnant à H₂/air ou à H₂/O₂ (connues sous l'abréviation PEMFC signifiant « Proton Exchange Membrane Fuel Cell »).

Ainsi, la présente invention se situe dans le domaine des piles à combustible fonctionnant sur le principe de l'oxydation de l'hydrogène et la réduction de l'oxygène.

### ETAT DE LA TECHNIQUE ANTÉRIEURE

Une pile à combustible de ce type est un générateur électrochimique, qui convertit l'énergie chimique en énergie électrique grâce à deux réactions électrochimiques : une réaction d'oxydation à l'anode d'un combustible (l'hydrogène) combinée à une réaction de réduction à la cathode d'un comburant (l'air ou l'oxygène).

Classiquement, ce type de piles à combustible comporte une pluralité de cellules électrochimiques montées en série, chaque cellule comprenant deux électrodes de polarité opposée séparées par une membrane échangeuse de protons faisant office d'électrolyte solide, cette membrane assurant le passage vers la cathode des protons formés, par réaction électrochimique, lors de l'oxydation du combustible à l'anode.

Les réactions électrochimiques susmentionnées (oxydation et réduction) se produisent au niveau de zones spécifiques des électrodes (dites, zones actives correspondant structurellement à des couches catalytiques) qui forment la jonction entre la couche de diffusion (au niveau de laquelle se produit l'alimentation en réactifs) des électrodes et la membrane et nécessitent, pour se produire, l'utilisation de catalyseurs, qui consistent, classiquement, pour les piles du type PEMFC, en des particules de platine.

Compte tenu des coûts impliqués par la présence d'un catalyseur comme le platine, il convient d'obtenir un maximum de surface catalytique pour une masse donnée de métal, un tel objectif pouvant être atteint par des particules de platine de tailles nanométriques (dénommées également nanoparticules de platine).

Il convient également, pour que les réactions électrochimiques puissent avoir lieu, que les particules de platine soient en contact à la fois avec du combustible ou du comburant (selon que l'on se situe au niveau de l'anode ou de la cathode), du conducteur protonique constitutif de la membrane et du conducteur électronique entrant dans la constitution de l'électrode (ce conducteur électronique étant classiquement un matériau carboné), cette zone de contact étant connue sous l'appellation de point triple, l'électrode étant d'autant plus efficace que le nombre de points triples est élevé.

En d'autres termes, en ces points triples, se présentent au niveau des particules de platine :
- une continuité physique avec la membrane électrolytique, pour assurer une conduction des protons H⁺;
- une continuité physique avec le conducteur électronique, pour assurer la conduction des électrons ; et
- une continuité physique avec la zone de diffusion des électrodes, pour assurer la diffusion des gaz (l'oxygène ou l'hydrogène pour les piles PEMFC).

Le maintien dans le temps de ces points triples suppose le respect de l'intégrité des zones de contacts entre les différents éléments entrant dans la constitution de ces points triples, ce qui implique un maintien de l'intégrité physique de ces différents éléments, notamment des particules de platine.

Or certaines études ont montré qu'il est possible d'assister, en cours de fonctionnement d'une pile, à une dégradation des particules de platine (induisant, de ce fait, une diminution de surface active) soit par des phénomènes de dissolution ou des phénomènes d'augmentation de tailles de particules (découlant, classiquement, de phénomènes d'agglomération).

Ces phénomènes de dissolution peuvent se produire avec des piles fonctionnant à très faibles pH (par exemple, un pH inférieur à 1) et à potentiels élevés de fonctionnement à la cathode (par exemple, un potentiel supérieur à 1 V par rapport à ERH (ERH signifiant électrode réversible à dihydrogène)) le platine dissous pouvant se retrouver soit dans l'eau formée au cours du fonctionnement de la pile soit à l'intérieur de la membrane électrolytique, généralement, polymérique, ce qui conduit, en son sein, à la formation de nanocristaux de platine inactifs.

Quant aux phénomènes d'augmentation, ils peuvent se produire avec des piles dont les nanoparticules de platine présentent une mobilité importante à la surface du support généralement carboné, sur lequel elles sont déposées, cette mobilité dépendant de l'énergie de surface de celui-ci.

Pour contourner ces phénomènes, il peut être fait appel à de forts taux de chargement en particules de platine avec les inconvénients que cela représente en termes de coûts de production, eu égard au prix très élevé du platine sur les marchés.

Afin de diminuer les taux de chargement tout en accédant à une surface active efficace, les études ont porté sur l'optimisation des assemblages électrode (ici, comprenant des particules de platine)-membrane.

Ainsi, il a été proposé de juxtaposer, par contact intime, les différents éléments (particules de platine, conducteur électrique et électrolyte) nécessaires à la création des points triples, cette juxtaposition pouvant consister :
- à mélanger des particules de platine avec de la poudre de carbone (remplissant le rôle de conducteur électrique) et à imprégner l'ensemble avec de l'électrolyte, de sorte à garantir un meilleur contact avec la membrane ;
- à déposer par des techniques de dépôts de couches minces (telles que l'électrodéposition ou la pulvérisation par voie physique) des particules de platine, ce qui permet de déposer du platine selon de faibles concentrations tout en conservant une activité catalytique très élevée.

Toutefois, les ensembles résultant de ces techniques sont fragiles en raison des liaisons faibles impliquées pour juxtaposer les éléments constitutifs de ces ensembles, ce qui ne permet pas d'empêcher les phénomènes de dégradation dus à la migration des particules de platine occasionnant, de ce fait, une diminution de la durée de vie de ces ensembles.

Pour pallier ces inconvénients, les auteurs de la présente invention ont proposé, dans WO 2013/068319, un procédé de préparation de particules de catalyseur, plus spécifiquement, en platine, greffées, de manière covalente, par des polymères conducteurs de protons *via* un reste organique d'un composé organique amorceur d'une polymérisation du type ATRP, des greffons spécifiques décrits dans ce document, étant des greffons de formule (l') suivante : 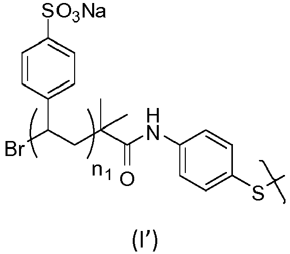 dans laquelle n₁ correspond au nombre de répétition du motif répétitif pris entre parenthèses et l'accolade indiquant l'endroit par lequel lesdits greffons sont liés de manière covalente aux particules.

En partant de ce procédé, les auteurs de la présente invention se sont fixé pour objectif d'améliorer encore le procédé susmentionné et de proposer un nouveau procédé qui permettrait, en outre, d'obtenir des particules qui, une fois incorporées, dans une pile à combustible, permettraient d'obtenir une amélioration des propriétés électrochimiques de la pile à combustible, telles que la tension à circuit ouvert, une meilleure activation des réactions électrochimiques au sein de la pile à combustible, une chute ohmique moins importante et une meilleure puissance délivrée.

Aussi, les auteurs de la présente invention ont découvert qu'en utilisant un amorceur ATRP spécifique dans le cadre du procédé de l'invention, il est ainsi possible d'obtenir des particules présentant les propriétés susmentionnées.

### EXPOSÉ DE L'INVENTION

Ainsi, l'invention a trait à un procédé de préparation de particules comprenant un matériau apte à catalyser la réduction de l'oxygène ou l'oxydation de l'hydrogène, lesdites particules étant greffées par des greffons consistant en au moins un polymère comprenant au moins un motif répétitif styrénique porteur d'au moins un groupe conducteur de protons, ledit procédé comprenant :
a) une étape de préparation d'au moins un polymère styrénique par polymérisation ATRP d'un monomère styrénique avec un amorceur ATRP répondant à la formule (I) suivante : 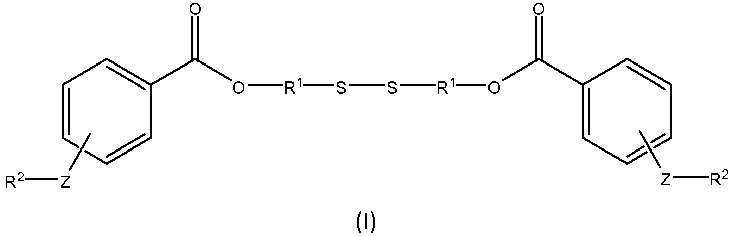 dans laquelle :
   - les groupes R¹ représentent, indépendamment l'un de l'autre, un groupe espaceur organique ;
   - les groupes Z représentent, indépendamment l'un de l'autre, une liaison simple ou un groupe espaceur organique ;
   - les groupes R² représentent, indépendamment l'un de l'autre, un atome d'halogène ;
   le polymère résultant répondant à la formule (II) suivante : 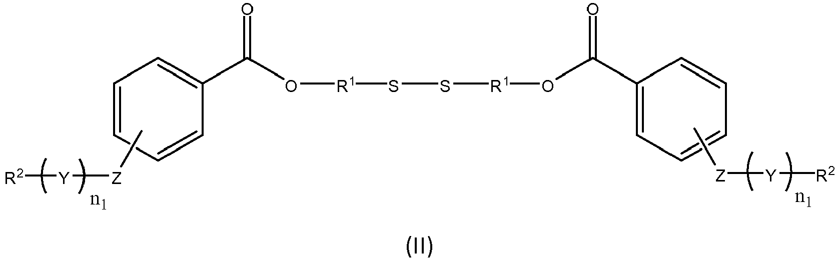 dans laquelle Y correspond au motif répétitif styrénique porteur d'au moins un groupe conducteur de protons et n₁ au nombre de répétition du motif répétitif pris entre parenthèses, les R¹, R² et Z étant tels que définis ci-dessus ;
b) une étape de mise en contact de particules comprenant un matériau apte à catalyser la réduction de l'oxygène ou l'oxydation de l'hydrogène avec le polymère obtenu en a), moyennant quoi l'on obtient des particules greffées par des greffons de formule (III) suivante : 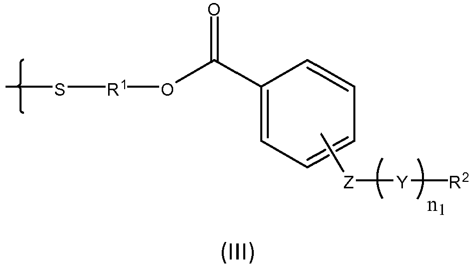 l'accolade indiquant l'endroit par lequel les greffons sont liés, de manière covalente, aux particules et les R¹, R², Z, Y et n₁ étant tels que définis ci-dessus.

En particulier, les groupes R¹ peuvent être identiques entre eux, de même que les groupes Z peuvent être identiques entre eux et les groupes R² peuvent être identiques entre eux.

Avant d'entrer plus en détail dans la présente description, nous précisons les définitions suivantes.

Par polymère, on entend, classiquement, au sens de l'invention, un composé constitué par l'enchaînement d'un ou plusieurs motifs répétitifs.

Par motif répétitif, on entend, classiquement, au sens de l'invention, un groupe organique bivalent (c'est-à-dire un groupe formant pont) issu d'un monomère après polymérisation de celui-ci.

Par polymérisation du type ATRP, on entend, une polymérisation radicalaire par transfert d'atomes (ATRP correspondant à l'abréviation de la terminologie anglaise « Atom Transfer Radical Polymerization »). Le mécanisme de ce type de polymérisation sera explicité plus en détail ci-dessous.

Ainsi, grâce à la mise en œuvre du procédé de l'invention, il est ainsi possible d'obtenir des particules comprenant un matériau apte à catalyser la réduction de l'oxygène ou l'oxydation de l'hydrogène greffées par covalence *via* un reste du composé amorceur ATRP par des polymères styréniques conducteurs de protons, ce qui permet, lorsque ces particules sont destinées à entrer dans la constitution d'électrodes (notamment au niveau de couches catalytiques de celles-ci) d'assurer une bonne continuité physique avec l'électrolyte adjacent, lorsque celui-ci est à base également de polymère(s) conducteur(s) de protons.

Qui plus est, grâce au choix spécifique d'amorceur ATRP, il a été possible d'obtenir des particules, qui confèrent, aux piles, dans lesquelles elles sont incorporées des propriétés améliorées.

Comme mentionné ci-dessous, le procédé de l'invention comporte une étape a) de préparation d'au moins un polymère styrénique par polymérisation ATRP d'un monomère styrénique avec un amorceur ATRP de formule (I) susmentionnée.

Cette étape de préparation est régie par les mécanismes de la polymérisation ATRP, qui fonctionne sur le principe de la formation réversible et rapide d'espèces dites « espèces dormantes » par création d'une liaison covalente avec une espèce radicalaire réactive.

Le composé amorceur d'une polymérisation du type ATRP de formule (I) est un composé comprenant au moins un groupe apte à amorcer la polymérisation ATRP, c'est-à-dire un groupe apte à se cliver au niveau d'une liaison pour former une première espèce radicalaire et une deuxième espèce radicalaire, la première espèce radicalaire réagissant ultérieurement, avec un premier carbone porteur d'une double liaison appartenant au monomère, la deuxième espèce radicalaire se fixant à un deuxième atome opposé au premier carbone porteur de la double liaison.

En d'autres termes, ce mécanisme peut être résumé selon le schéma réactionnel suivant :

X¹-X² + C=C → X¹-C-C-X²

X¹-X² correspondant à l'amorceur susmentionné avec X¹ correspondant à la première espèce et X² correspondant à la deuxième espèce, l'espèce X¹-C-C-X² étant une espèce dormante, qui peut croître par additions successives de monomères sur des radicaux libres, comme dans une polymérisation radicalaire classique, les radicaux libres étant créés par départ du groupe X², qui se fixe ensuite après insertion du monomère à l'extrémité de la chaîne polymérique, laquelle constitue toujours une espèce dormante qui peut continuer à croître dès lors qu'il subsiste des monomères dans le milieu de polymérisation.

Pour des raisons de simplicité, nous avons représenté ci-dessus uniquement la double liaison du monomère.

En outre, le composé amorceur de formule (I) utilisé dans le cadre de cette étape de préparation comprend au moins un groupe apte à se greffer à la surface des particules susmentionnées, c'est-à-dire un groupe apte à réagir avec la surface desdites particules pour former une liaison covalente, moyennant quoi il subsiste un reste de cet amorceur lié de façon covalente à la surface desdites particules.

Pour les composés amorceurs de formule (I), le groupe apte à amorcer une polymérisation du type ATRP est le groupe -Z-R² mentionné ci-dessus, ce groupe pouvant se cliver, de façon homolytique, au niveau de la liaison carbone-halogène pour former deux espèces radicalaires, une première espèce radicalaire carbone (pouvant être symbolisé par -C·) et une deuxième espèce radicalaire consistant en un radical halogène (pouvant être symbolisé par R₂·), la première espèce réagissant avec une extrémité de la double liaison du monomère et la deuxième espèce réagissant avec l'extrémité opposée de la double liaison. Sur la formule (I), ce groupe -Z-R² étant représenté comme entrecoupant une liaison carbone-carbone du groupe phényle, cela signifie qu'il peut être lié à l'un quelconque des atomes de carbone de ce groupe phényle.

Le groupe apte à se greffer à la surface de particules correspond, pour ce type de composés, au groupe disulfure -S-S-.

Pour les composés de formule (I), les groupes R¹ et les groupes Z peuvent représenter, indépendamment l'un de l'autre, un groupe alkylène, par exemple, un groupe éthylène, un groupe méthylène.

Plus spécifiquement, les R¹ peuvent être un groupe éthylène et les Z peuvent être un groupe méthylène.

Quand les Z représentent une liaison simple, cela signifie, en d'autres termes, que R² est directement lié à l'un quelconque des atomes de carbone du groupe phényle.

Pour les composés de formule (I), les groupes -Z-R² peuvent être situés en position *para* par rapport aux groupes -COO-.

Un composé amorceur ATRP particulier entrant dans catégorie des composés de formule (I) est un composé de formule (IV) suivante :

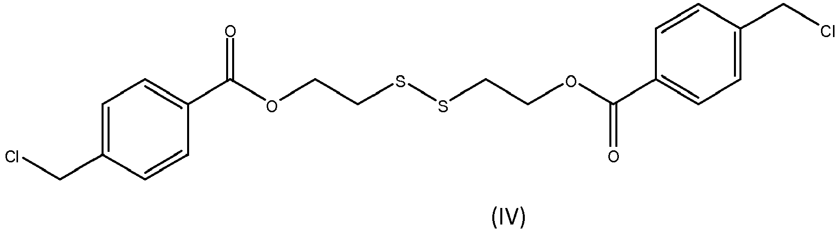

Les composés de formule (I) peuvent être synthétisés par une réaction de substitution nucléophile entre un composé halogénure d'acyle et un composé alcoolique, cette réaction étant basée sur la formation d'un alcoolate à partir de la déprotonation du composé alcoolique en milieu basique (par exemple, en présence, de triéthylamine), l'alcoolate ainsi formé réagissant sur le chlorure d'acyle pour former le composé amorceur, généralement à une température de l'ordre de 0°C, de sorte à assurer la stabilité de l'alcoolate.

A titre d'exemple, lorsqu'il s'agit de préparer un composé de formule (IV) susmentionnée, la réaction d'acylation peut se produire entre le composé 2-hydroxyéthyldisulfure et le composé chlorure de 4-chlorométhylbenzoyle selon le schéma réactionnel suivant : 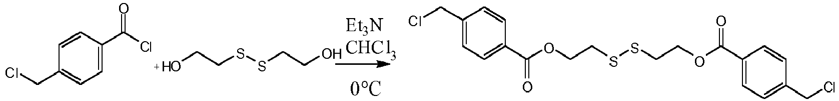 cette réaction pouvant être réalisée avec du chloroforme comme solvant organique.

Les monomères aptes à être utilisés dans le cadre de l'étape de polymérisation sont des monomères styréniques et peuvent être, plus spécifiquement, des monomères répondant à la formule (V) suivante : 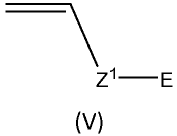 dans laquelle :
- Z¹ correspond à un groupe phénylène ; et
- E correspond à un groupe conducteur de protons, éventuellement sous forme d'un sel, tel qu'un groupe acide sulfonique, un groupe acide phosphonique ou un groupe acide carboxylique.

Un monomère spécifique répondant à la définition donnée ci-dessus est un monomère acide styrènesulfonique, par exemple sous forme d'un sel, tel qu'un sel de sodium (auquel cas, on pourra parler de monomère styrènesulfonate de sodium).

Un exemple de ce type de monomère est un monomère de formule (VI) suivante : 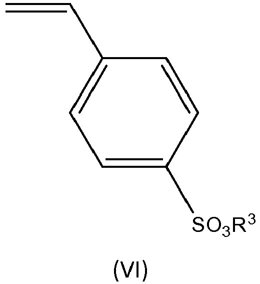 dans laquelle R³ est un atome d'hydrogène ou un cation (par exemple, un cation de métal alcalin).

Outre la présence d'un ou plusieurs monomères tels que définis ci-dessus, l'étape de polymérisation se déroule, classiquement, en présence d'un sel métallique (par exemple, un halogénure métallique, tel qu'un halogénure de cuivre, comme le chlorure de cuivre) et d'un ligand organique.

On précise que, par ligand organique, on entend un composé organique comprenant au moins un doublet libre apte à venir combler une lacune électronique d'un élément métallique (en l'occurrence, dans notre cas, une lacune électronique sur l'élément métallique du sel susmentionné) pour former un complexe métallique.

A titre d'exemple, un ligand organique approprié peut être un composé appartenant à la famille des composés pyridines, tels que la bipyridine.

L'étape de polymérisation peut être réalisée, en outre, dans un mélange eau/solvant organique (par exemple, un solvant alcoolique) sous flux d'un gaz inerte (tel qu'un flux d'argon) pendant une température et durée appropriées pour engendrer la polymérisation.

En outre, cette étape de polymérisation peut être suivie d'une étape d'hydrolyse destinée à protoner les groupes conducteurs de protons, lorsqu'ils se présentent sous forme d'un sel (soit, en d'autres termes, cette étape consiste à remplacer les cations du sel par des atomes d'hydrogène).

Les masses molaires moyennes des polymères obtenus à l'issue de l'étape de polymérisation peuvent aller de 1000 à 1 000 000 g/mol, de préférence de 3000 à 500 000 g/mol, et plus spécifiquement, de 3000 à 200 000 g/mol.

Après l'étape a), le procédé de l'invention comprend une étape b) de mise en contact de particules comprenant un matériau apte à catalyser la réduction de l'oxygène ou l'oxydation de l'hydrogène avec le polymère obtenu en a), moyennant quoi l'on obtient des particules greffées par des greffons de formule (III) suivante : 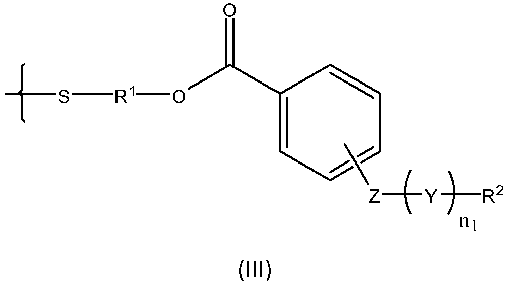 le groupe -Z-(Y)ₙ₁-R², qui entrecoupe une liaison carbone-carbone du groupe phényle, signifiant qu'il peut être lié à l'un quelconque des atomes de carbone du groupe phényle.

Cette étape a) de mise en contact peut comprendre une opération de dispersion des particules susmentionnées, par exemple, dans un solvant électrophile (tel qu'un solvant amine, tel que l'hexylamine) suivie d'une opération de mise en contact de la dispersion obtenue avec un ou plusieurs polymères tels que définis ci-dessus dans des conditions suffisantes pour permettre le greffage par covalence des polymères préparés en a).

Les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s)).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Sans être lié par la théorie, le polymère, en présence de particules, va se scinder en deux restes organiques par clivage homolytique de la liaison entre les deux atomes de soufre, les deux restes consistant en des espèces radicalaires, les électrons libres étant situés au niveau des atomes de soufre, ces électrons libres s'associant chacun avec un électron présent à la surface des particules pour former une liaison covalente entre les restes susmentionnés et les particules *via* les atomes de soufre, le produit résultant pouvant être schématisé de la façon suivante : 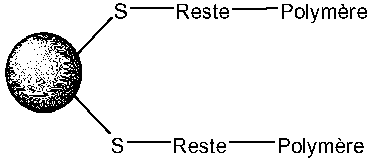 la sphère pleine correspondant à une particule, -S-Reste- correspondant à un reste du composé amorceur ATRP formant pont entre la particule et le polymère (respectivement, une première chaîne polymérique et une deuxième chaîne polymérique).

Concernant le polymère, le groupe conducteur de protons peut être un groupe acide sulfonique -SO₃H, un groupe acide carboxylique -CO₂H ou un groupe acide phosphonique -PO₃H₂, ces groupes pouvant être présents éventuellement sous forme de sels.

Préalablement à l'étape a) et/ou b), le procédé de l'invention peut comprendre également une étape de préparation desdites particules susmentionnées, à savoir des particules comprenant un matériau apte à catalyser l'oxydation de l'hydrogène ou la réduction de l'oxygène.

Lorsque les particules sont des particules métalliques, la préparation de ces dernières peut consister à réduire un sel métallique en faisant réagir celui-ci avec un agent réducteur.

Par exemple, lorsque les particules métalliques sont des particules de platine, elles peuvent être préparées par réduction d'un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être réalisée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu peut se dérouler par la mise en œuvre des opérations suivantes :
- une opération de mise en contact d'un sel de platine (par exemple, H₂PtCl₆-H₂0) préalablement dissous dans de l'eau avec un milieu comprenant une huile et éventuellement un agent dispersant (par exemple, du tétraéthylèglycoldodécyléther);
- une opération d'ajout au mélange résultant de l'opération précédente d'un agent réducteur, en une ou plusieurs fois, à l'issue de laquelle le mélange résultant est agité pendant une durée suffisante jusqu'à cessation de tout dégagement gazeux (cette cessation indiquant que la réaction de réduction est achevée).

Le mélange final comprend ainsi des particules de platine, lequel mélange peut être utilisé tel quel pour la mise en œuvre de l'étape a) (on pourra ainsi dire que l'étape a) est réalisée *in situ*).

En variante, le mélange final peut être traité (par exemple, par filtration) de sorte à isoler les particules de platine obtenues, ces dernières étant destinées à être utilisées pour la mise en œuvre de l'étape a).

Outre le fait que les particules obtenues selon le procédé de l'invention sont fonctionnalisées par des polymères comprenant au moins un motif répétitif porteur d'au moins un groupe conducteur de protons ou précurseur de celui-ci, ces particules peuvent être également liées (par exemple, également, par covalence) à un matériau carboné (pouvant être assimilé à un support carboné), tel que du graphite, du noir de carbone, des fibres de carbone, des tubes de carbone (tels que des nanotubes de carbone), du graphène.

Lorsque les particules sont liées à un matériau carboné, celui-ci peut intervenir à différents moments de la mise en œuvre du procédé de l'invention.

Selon un premier mode de réalisation, les particules peuvent être utilisées déjà liées à un matériau carboné lors de la mise en œuvre de l'étape b).

Ces particules déjà liées à un matériau carboné peuvent être préparées préalablement à l'étape de mise en œuvre de l'étape b).

Dans ce cas, le procédé de l'invention peut comprendre, avant la mise en œuvre de l'étape b), une étape de préparation de particules comprenant un matériau apte à catalyser la réduction de l'oxygène ou l'oxydation de l'hydrogène liées à un matériau carboné.

Selon une première variante, lorsque les particules sont des particules métalliques, la préparation de ces dernières peut comprendre :
- une opération de réduction d'un sel métallique en faisant réagir celui-ci avec un agent réducteur, moyennant quoi l'on obtient des particules métalliques ;
- une opération de mise en contact du milieu résultant de l'opération précédente avec le matériau carboné destiné à être lié aux particules, moyennant quoi l'on obtient des particules métalliques liées à un matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être effectuée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu, avant la mise en contact avec le matériau carboné, peut se dérouler par la mise en œuvre des opérations suivantes :
- une opération de mise en contact d'un sel de platine (par exemple, H₂PtCl₆-H₂0) préalablement dissous dans de l'eau avec un milieu comprenant une huile et éventuellement un agent dispersant ;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

Ce mélange comprenant des particules de platine est mis ensuite en contact avec le matériau carboné, de préférence sous ultrasons, moyennant quoi l'on obtient, à l'issue de cette opération de mise en contact, un mélange final comprenant des particules de platine liées au matériau carboné, lequel mélange peut être utilisé tel quel pour la mise en œuvre de l'étape b).

En variante, ce mélange final peut être traité (par exemple, par filtration) de sorte à isoler les particules de platine obtenues, ces dernières étant destinées à être utilisées pour la mise en œuvre de l'étape b).

Selon une deuxième variante, lorsque les particules sont des particules métalliques, la préparation peut consister en une étape de réduction au moyen d'un agent réducteur d'un mélange comprenant un sel métallique et un matériau carboné, en faisant réagir celui-ci avec un agent réducteur, moyennant quoi l'on obtient des particules métalliques liées au matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

Encore plus spécifiquement, la préparation de particules de platine liées à un matériau carboné peut se dérouler par la mise en œuvre des opérations suivantes :
- une opération de mise en contact d'une solution aqueuse basique (par exemple, à base de carbonate de lithium) d'un sel de platine (par exemple, H₂PtCl₆-H₂0) avec le matériau carboné ;
- une opération d'ajout au mélange résultant de l'opération précédente d'un agent réducteur, à l'issue de laquelle le mélange résultant est agité pendant une durée suffisante jusqu'à obtention d'un mélange comprenant des particules de platine liées au matériau carboné.

Ce mélange peut être traité (par exemple, par filtration) de sorte à isoler les particules de platine obtenues, ces dernières étant destinées à être utilisées pour la mise en œuvre de l'étape b).

Selon un deuxième mode de réalisation, les particules peuvent être utilisées, lors de la mise en œuvre de l'étape b), sous une forme non liée au matériau carboné, ce qui implique, dans ce cas, que le procédé de l'invention comprenne, après l'étape b) une étape de mise en contact des particules obtenues à l'issue de l'étape b) avec le matériau carboné (dite ci-après étape b'), moyennant quoi lesdites particules sont liées à l'issue de cette étape au matériau carboné.

Plus spécifiquement, cette étape de mise en contact avec le matériau carboné peut être réalisée sous ultrasons, de sorte à activer la collision des particules avec le matériau carboné pour former une liaison entre ces particules et le matériau.

Pour le premier mode de réalisation (c'est-à-dire le mode de réalisation, dans lequel les particules sont utilisées déjà liées à un matériau carboné avant la mise en œuvre de l'étape b)), l'étape b) peut être réalisée par les opérations suivantes :
- une opération de mise en dispersion des particules dans un solvant organique électrophile, tel qu'un solvant amine (comme l'hexylamine), ce type de solvant contribuant à assurer une bonne stabilisation de la dispersion, moyennant quoi l'on obtient une dispersion de particules comprenant un matériau apte à catalyser l'oxydation de l'hydrogène ou la réduction de l'oxygène liées à un matériau carboné ;
- une opération de mise en contact de la dispersion susmentionnée avec un polymère tel que défini ci-dessus, de préférence préalablement dissous dans de l'eau ;
- éventuellement, une opération de lavage des particules obtenues, par exemple, par des cycles de précipitation/centrifugation, de sorte à éliminer les traces de composé amorceur n'ayant pas réagi.

Pour le deuxième mode de réalisation (c'est-à-dire le mode de réalisation, pour lequel le procédé de l'invention comprend, après l'étape b), une étape de mise en contact des particules obtenues à l'issue de l'étape b) avec le matériau carboné (dite ci-après étape b'), moyennant quoi lesdites particules sont liées à l'issue de cette étape au matériau carboné), le procédé de l'invention peut comprendre :
- une étape de préparation de particules comprenant un matériau apte à catalyser l'oxydation de l'hydrogène ou la réduction de l'oxygène ;
- une étape b), telle que définie ci-dessus, de mise en contact, dans le milieu de synthèse de l'étape précédente, d'un polymère tel que défini ci-dessus avec les particules obtenues préalablement ;
- une étape de mise en contact des particules issues de l'étape b) avec un matériau carboné, de sorte à obtenir des particules liées à un matériau carboné.

Lorsque les particules sont des particules métalliques, l'étape de préparation de ces dernières peut comprendre une opération de réduction d'un sel métallique en faisant réagir celui-ci avec un agent réducteur, moyennant quoi l'on obtient des particules métalliques.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être effectuée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu, avant la mise en contact le composé amorceur puis le matériau carboné, peut se dérouler par la mise en œuvre des opérations suivantes :
- une opération de mise en contact d'un sel de platine (par exemple, H₂PtCl₆-H₂0) préalablement dissous dans de l'eau avec un milieu comprenant une huile et éventuellement un agent dispersant;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

L'étape b) de mise en contact peut se faire par introduction du polymère en milieu aqueux, de sorte à ne pas perturber le milieu de synthèse des particules.

L'étape de mise en contact avec le matériau carboné peut se faire par introduction de celui-ci directement dans le milieu de synthèse et soumission du mélange résultant à un traitement aux ultrasons, de sorte à engendrer la liaison du matériau carboné aux particules.

Ce mode de réalisation permet de réaliser une synthèse monotope de particules liées à un matériau carboné et greffées à des polymères tels que définis ci-dessus *via* des restes de composé amorceur d'une polymérisation ATRP.

Selon un troisième mode de réalisation, le procédé de l'invention comprend une étape de préparation des particules en un matériau apte à catalyser la réduction de l'oxygène ou l'oxydation de l'hydrogène liées à un matériau carboné, cette étape étant réalisée de façon concomitante à l'étape b).

Dans ce cas, lorsque les particules sont des particules métalliques, la préparation de ces dernières réalisées concomitamment à l'étape b) comprend :
- une étape de mise en contact d'un sel métallique, d'un matériau carboné, en milieu basique, avec un polymère tel que défini ci-dessus à l'étape a) ;
- une étape d'ajout au mélange résultant de l'étape précédente d'un agent réducteur, moyennant quoi il résulte des particules conformes à l'invention, à savoir des particules métalliques liées à un matériau carboné et à des polymères tels que définies ci-dessus ;
- éventuellement une étape d'isolement des particules ainsi obtenues.

Par exemple, lorsque les particules sont des particules de platine, la préparation de ces dernières réalisées concomitamment à l'étape b) comprend :
- une étape de mise en contact d'un sel de platine (par exemple, H₂PtCl₆-H₂0), d'un matériau carboné (tel que du noir de carbone) avec une solution aqueuse basique (par exemple, à base de carbonate de lithium) et avec un polymère tel que défini pour l'étape a) ;
- une étape d'ajout au mélange résultant de l'étape précédente d'un agent réducteur, à l'issue de laquelle le mélange résultant est agité pendant une durée suffisante jusqu'à obtention d'un mélange final comprenant des particules de platine liées au matériau carboné et au polymère susmentionné.

Selon ce troisième mode de réalisation, de façon tout à fait inattendue, la présence du polymère, dès le départ, ne modifie pas la réactivité du sel métallique ni le mécanisme de formation des particules, ce qui est particulièrement avantageux, car il peut être ainsi envisageable de fabriquer lesdites particules selon une méthode dite « one pot » (dite encore méthode monotope).

Quel que soit le mode de réalisation engagé, le taux de greffage de polymère(s) (exprimé en pourcentage massique de polymère dans les particules) peut aller de 1 à 25% massique.

Les particules susceptibles d'être obtenues par le procédé de l'invention, sont des particules comprenant un matériau apte à catalyser la réduction de l'oxygène ou l'oxydation de l'hydrogène, tel que du platine, lesdites particules étant greffées par des greffons de formule (III) suivante : 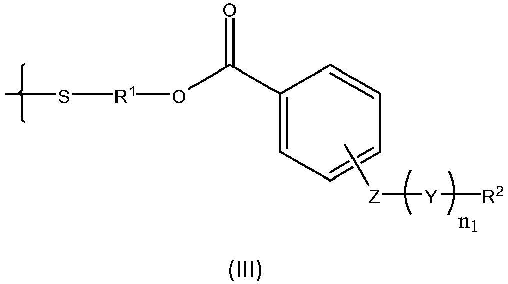 dans laquelle les R¹, R², Z, Y et n₁ répondent aux mêmes définitions que celles données ci-dessus, le groupe -Z-(Y)ₙ₁-R², qui entrecoupe une liaison carbone-carbone du groupe phényle signifiant qu'il peut être lié à l'un quelconque des atomes de carbone du groupe phényle.

Plus spécifiquement, R¹ et Z représentent un groupe alkylène et R² un atome d'halogène, tel que du chlore, tandis que Y peut représenter un motif répétitif issu de la polymérisation d'un monomère styrénique de formule (IV) ou (IV') susmentionnée, tel qu'un monomère styrènesulfonate de sodium. Le groupe -Z-(Y)ₙ₁-R² peut être également en position *para* par rapport au groupe -CO-O-.

Pour information, l'accolade indique l'endroit par lequel les greffons sont liés, de manière covalente, aux particules.

Les particules peuvent être, en particulier, des particules en platine.

Des particules spécifiques conformes à l'invention peuvent être des particules de platine greffées par des greffons de formule (VII) suivante : 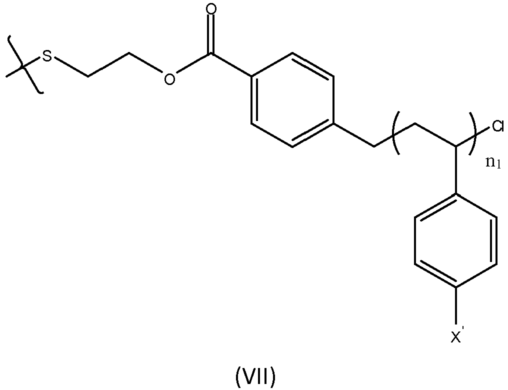 avec n₁ étant tel que défini ci-dessus et X' étant un groupe acide sulfonique -SO₃H, un groupe acide carboxylique -CO₂H ou un groupe acide phosphonique -PO₃H₂, ces groupes pouvant être présents éventuellement sous forme de sels.

Les particules peuvent être, en outre, liées de façon covalente, à un matériau carboné.

De telles particules sont particulièrement intéressantes, car elles permettent de transposer la phénoménologie du point triple à l'échelle moléculaire, le rôle du catalyseur étant rempli par le matériau constitutif de la particule en tant que telle, le rôle du conducteur protonique étant rempli par les polymères susmentionnés et le rôle du conducteur électronique étant rempli par le matériau carboné. Les liaisons covalentes entre le conducteur électronique et le catalyseur d'une part et entre le matériau conducteur protonique et le catalyseur d'autre part assurent, premièrement, un meilleur transfert des charges (respectivement, électrons et protons) et donc de meilleures performances et, deuxièmement, une parfaite stabilité en conditions de fonctionnement en pile, lorsque ces particules sont utilisées dans des piles. Ces deux résultats permettent de réduire le taux de chargement en catalyseur pour des performances accrues.

Comme déjà mentionné pour le procédé, les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Quant au matériau carboné, lorsqu'il est présent, il peut être du graphite, du noir de carbone, des fibres de carbone, des tubes de carbone (tels que des nanotubes de carbone), du graphène.

Le rapport entre matériau carbone et platine peut être compris entre 80/20 et 20/80, idéalement entre 45/55 et 65/35.

Les particules de l'invention peuvent entrer dans la constitution d'électrodes de piles à combustible, en particulier de piles à combustibles du type PEMFC, plus particulièrement dans des couches catalytiques d'électrodes de piles à combustible.

Ainsi, l'invention a également trait à des électrodes comprenant de telles particules et à des piles à combustibles comprenant au moins un assemblage électrode-membrane-électrode, dans lequel au moins une de ses électrodes est une électrode conforme à l'invention.

Ces particules ne présentent aucun signe de dégradation en-dessous de 220°C (cette limite étant déterminée par ATG). Par ailleurs, la tenue électrochimique de la couronne organique (constituée par les polymères greffés aux particules) a été démontrée dans une gamme de potentiels de 0 à 1,2 V vs ERH (ERH signifiant électrode réversible à dihydrogène), ce qui permet d'envisager d'utiliser ces particules comme catalyseurs pour les piles à combustible du type PEMFC.

Ces particules sont dispersables dans une solution alcoolique. Il est dès lors possible de les mélanger à un ionomère conducteur protonique dans des proportions allant de 100/0 à 70/30. La solution peut alors être déposée sur tout type de support poreux carboné (tissu ou feutre) et utilisé comme électrode de pile à combustible.

Qui plus est, les particules de l'invention, une fois incorporées dans des piles à combustible, permettent d'obtenir une amélioration des propriétés, telles que la tension en circuit ouvert, une meilleure activation des réactions électrochimiques au sein de la pile, une chute ohmique moins importante et une meilleure puissance délivrée, par rapport à des batteries similaires, dans lesquelles cependant les particules introduites sont des particules greffées par des greffons de formule (I').

Par ailleurs, ces particules présentent une activité électrocatalytique même lorsqu'elles sont mises en œuvre sans ionomère de type Nafion. Ce résultat particulièrement remarquable permet de réaliser des électrodes sans Nafion. Associées à des membranes alternatives au Nafion, ces particules permettront de réaliser des assemblages membrane/électrode libre de tout Nafion.

Ainsi, les piles à combustible, par exemple du type PEMFC, comprennent, classiquement, au moins un assemblage électrode-membrane-électrode, dans lequel au moins une de ses électrodes est à base de particules conforme à l'invention.

La membrane quant à elle peut être à base d'un matériau polymérique conducteur de protons, le ou les polymères constitutifs de ce matériau pouvant être de même nature que le ou les polymères greffés à la surface desdites particules.

Les polymères utilisés pour greffer les particules de l'invention sont nouveaux et répondent à la formule (II) suivante : 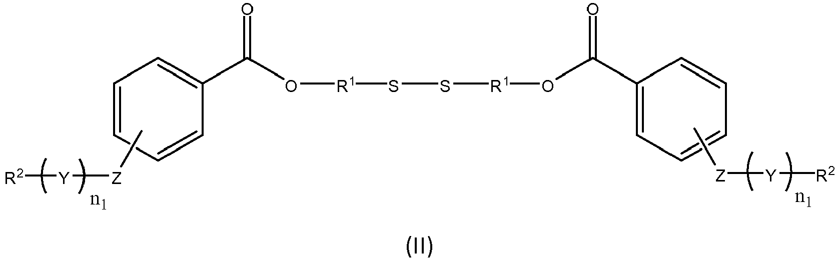 dans laquelle les R¹, R², Z, Y et n₁ répondent aux mêmes définitions que celles données ci-dessus.

Les déclinaisons fournies ci-dessus pour les définitions de R¹, Z, Y, R² peuvent être reprises pour la définition des polymères de l'invention.

En particulier, les groupes R¹, Z peuvent être des groupes alkylènes, tels qu'un groupe éthylène, un groupe méthylène.

Les groupes -Z-(Y)ₙ₁-R² peuvent être liés à l'un quelconque des atomes de carbone du groupe phényle et, en particulier, peuvent être situés en position *para* par rapport au groupe -CO-O-.

Un polymère spécifique conforme à l'invention est un polymère de formule (VII) suivante : 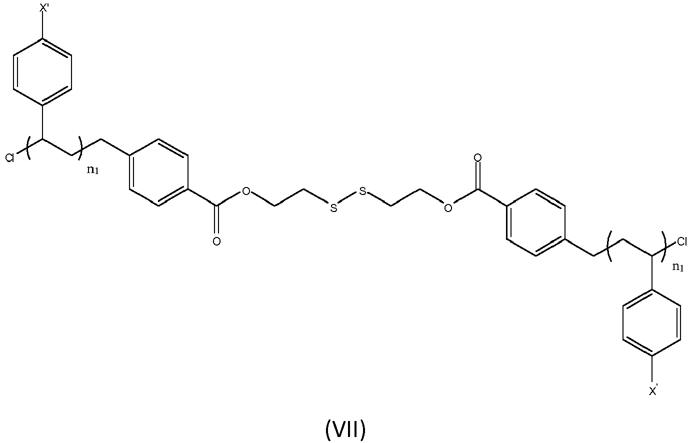 dans laquelle n₁ correspond à la définition donnée à la revendication 1 et X' est un groupe acide sulfonique -SO₃H, un groupe acide carboxylique -CO₂H ou un groupe acide phosphonique -PO₃H₂, ces groupes pouvant être présents éventuellement sous forme de sels.

Les amorceurs utilisés dans le cadre du procédé de l'invention sont également nouveaux et répondent à la formule (I) suivante : 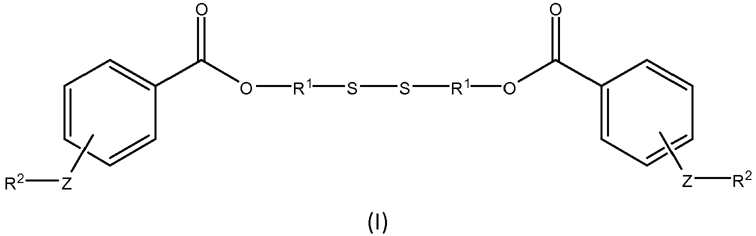 dans laquelle :
- R¹ représente un groupe espaceur organique ;
- Z représente une liaison simple ou un groupe espaceur organique ;
- R² est un atome d'halogène.

Les déclinaisons fournies ci-dessus pour les définitions de R¹, Z, et R² peuvent être reprises pour la définition des amorceurs de l'invention.

En particulier, les groupes R¹, Z peuvent être des groupes alkylènes, tels qu'un groupe éthylène, un groupe méthylène.

Plus spécifiquement, les R¹ peuvent être un groupe éthylène et les Z peuvent être un groupe méthylène.

Les groupes -Z-R² peuvent être liés à l'un quelconque des atomes de carbone du groupe phényle et, en particulier, peuvent être situés en position *para* par rapport au groupe -CO-O-.

Un amorceur ATRP spécifique et conforme à l'invention répond à la formule (VI) suivante :

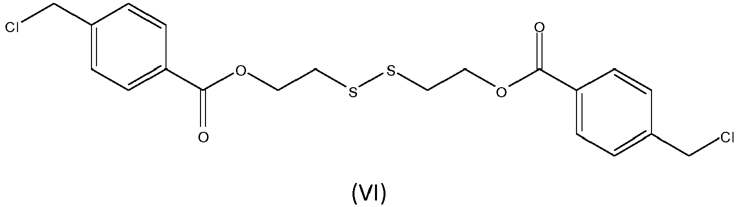

L'invention va être à présent décrite, par rapport aux exemples suivants donnés à titre illustratif et non limitatif.

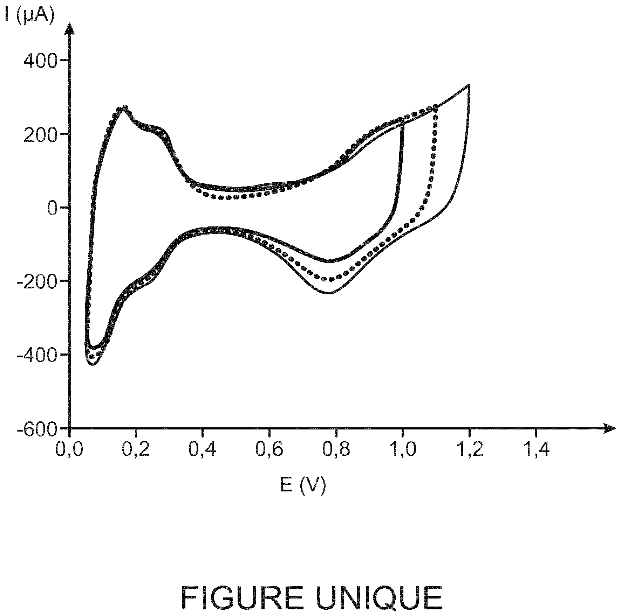

### BREVE DESCRIPTION DE LA FIGURE UNIQUE

La figure unique représente un voltammogramme illustrant l'évolution de l'intensité I (en µA) en fonction du potentiel E (en V) vs ERH obtenu avec un dispositif comprenant une électrode conforme à l'invention telle que définie à l'exemple 4.

### EXPOSÉ DÉTAILLÉ DE MODES DE RÉALISATION PARTICULIERS

### EXEMPLE 1

Cet exemple illustre la préparation d'un amorceur ATRP conforme à l'invention : le disulfanediyldiéthane-2,1-diyl bis[4-(chlorométhyl)benzoate] de formule (VI) suivante :

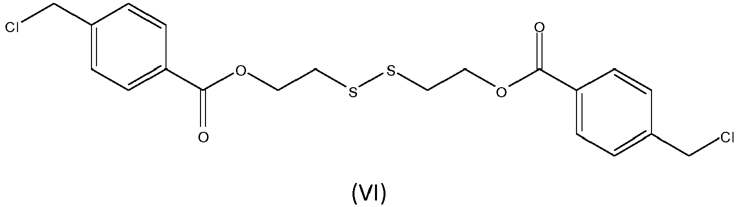

Pour ce faire, dans un bicol de 100 mL sont introduits, sous atmosphère inerte, du 2-hydroxyéthyldisulfide (1,53 g ; 9,9 mmol ; 1 éq.), du chloroforme (30 mL) et de la triéthylamine (4,22 g ; 41,7 mmol ; 4,2 éq.). Le bicol est scellé sous argon puis plongé dans un bain de glace à 0°C.

Ensuite, du chlorure de 4-chlorométhylbenzoyle (2,06 g ; 10,9 mmol ; 1,1 éq.) est introduit au goutte-à-goutte. Puis on laisse le mélange revenir à température ambiante pendant une nuit. Le mélange réactionnel résultant est lavé 4 fois (un lavage acide, un lavage neutre, un lavage basique puis un lavage neutre). Les phases organiques sont réunies et séchées. Le solvant organique est ensuite éliminé à l'évaporateur rotatif. Le produit solide obtenu est ensuite séché à l'étuve à 60°C pendant une nuit.

Le produit résultant (avec un rendement de 97%) correspond au produit attendu de formule ci-dessus selon les analyses de spectroscopie RMN ¹H et d'analyse élémentaire, dont les résultats figurent ci-dessous.
**RMN ¹H** (400 MHz, CDCl₃, 6=7,26 ppm) : 7,9 (m, 2H, H aromatique), 7,4 (m, 2H, H_{aromatique}), 4,5 (m, 4H, Ph-CH₂-Cl et O-CH₂-CH₂), 3,0 (t, 2H, O-CH₂-CH₂-S)
**Analyse élémentaire (en %)** : (C₂₀H₂₀Cl₂O₄S₂), C: 52,1 ; H: 4,4; Cl:15,5 ; O: 14; S: 14.

### EXEMPLE 2

Cet exemple illustre la préparation d'un polymère pouvant être schématisé par la formule suivante ci-dessous : 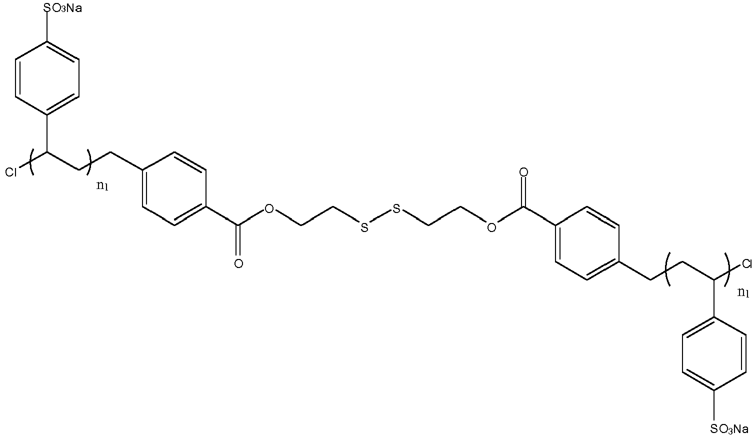 avec n₁ correspondant au nombre de répétition du motif pris entre parenthèses,

Pour ce faire, dans un premier temps, un bicol de 100 mL est soumis à un traitement thermique sous vide comprenant 3 cycles avec une phase de chauffage et une phase de refroidissement à température ambiante.

Puis de l'eau MilliQ (48 mL) est introduite dans le bicol et est dégazée sous vide en faisant buller de l'argon (15 minutes). Du styrènesulfonate de sodium (18,8 g ; 90 mmol ; 1000 éq.) est ensuite introduit sous flux d'argon et de l'argon est remis à buller sous vide.

En parallèle, du méthanol (16 mL) est dégazé sous vide en faisant buller de l'argon (15 minutes) dans un ballon piriforme de 25 mL. L'amorceur préparé à l'exemple 1 (50 mg ; 0,09 mmol ; 1 éq.) est ensuite introduit sous forme d'argon.

Lorsque le monomère est parfaitement dissous dans l'eau, de la bipyridine (116 mg ; 0,74 mmol ; 8 éq.) et du chlorure de cuivre (37 mg ; 0,37 mmol ; 4 éq.) sont introduits sous flux d'argon.

De l'argon est mis à buller dans le système tout en tirant sous vide.

La solution d'amorceur dans le méthanol est introduite avec une seringue (20 mL) en veillant à conditionner celle-ci sous argon. Trois cycles vide-argon sont enfin effectués.

Le bicol est enfin mis en place dans un bain d'huile préalablement chauffé à 45°C. Après environ, 21 heures de polymérisation, la réaction est stoppée par mise à l'air du système. La solution passe d'une couleur marron à un couleur verte-bleue.

Le mélange réactionnel est ensuite filtré sur gel de silice, afin d'éliminer les ions chlorure contenu dans le système catalytique et piégés dans le polymère.

Le filtrat est ensuite concentré sous vide, afin d'augmenter la concentration en polymère et donc de faciliter la précipitation.

Enfin, le polymère est précipité dans du méthanol froid.

Le polymère obtenu est un solide blanchâtre pégueux puis est placé à l'étuve à 65°C pendant 1 nuit.

Le polymère résultant correspond au produit attendu de formule ci-dessus selon les analyses RMN ¹H, dont les résultats figurent ci-dessous.

**RMN ¹H** (D₂O) 6: 7,5 (s large, proton aromatique), 6,6 (s large, proton aromatique), 1,4 (s large, proton méthylique).

### EXEMPLE 3

Cet exemple illustre la préparation de particules de platine liées à un matériau carboné du type noir de carbone (dénommé, dans la formule ci-dessous "Vulcan XC72"), réprésentées par la formule ci-dessous: 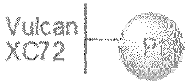 par une méthode impliquant une microémulstion dite "eau-dans-huile".

Dans un réacteur, on verse de l'heptane (37,4 g) et du Brij® 30 (8,6 g). Le réacteur est ensuite agité manuellement et immédiatement de manière vigoureuse, afin d'éviter la précipitation du Brij® 30, jusqu'à ce que le mélange soit bien translucide.

En parallèle, un sel de platine hexahydraté H₂PtCl₆.6H₂O (257,6 mg ; 0,5 mmol, 1 éq.) est dissous dans 2 mL d'eau milliQ dans un pilulier. La solution est bien agitée, jusqu'à ce que la solution soit bien homogène.

On ajoute, dans le réacteur susmentionné, 1,6 mL de la solution de sel métallique puis on agite manuellement, jusqu'à ce que le mélange soit limpide. Ce mélange prèsente une couleur jaune orangée.

Le mélange résultant est laissé au repos pendant une durée de 15 minutes, afin qu'il se stabilise.

Du borohydrure de sodium (152 mg ; 4 mmol; 15 éq.) est ajouté au mélange en une seule fois rapidement et le mélange est agité immédiatement de manière vigoureuse (le borohydrure de sodium devant réduire le métal avant l'eau). Le mélange passe à une coloration noire intense.

Le mélange est laissé au repos pendant une durée de 1 à 2 heures, de manière à ce que le platine soit totalement réduit et que le NaBH₄ soit totalement désactivé.

Après deux heures, le mélange est placé sous ultrasons pendant 5 minutes, en agitant de temps en temps, de manière à ce qu'il n'y ait plus de dépôt au fond du réacteur.

Du noir de carbone Vulcan®XC 72 (préalablement finement broyé) est ajouté dans le mélange, pendant que celui-ci est toujours soumis aux ultrasons, ceux-ci étant maintenus pendant 5 minutes, une fois l'ajout effectué, tout en maintenant une agitation sporadique. Après 5 minutes, le réacteur est agité fortement de manière manuelle puis, après vérification que le noir de carbone ne se dépose pas au fond du réacteur, celui-ci est soumis de nouveau aux ultrasons pendant 5 minutes avant d'être, encore une fois, agité manuellement. Cette manipulation est réitérée, jusqu'à ce que le carbone ne se dépose plus au fond du réacteur.

Puis, une fois le noir de carbone bien en suspension, le réacteur est laissé dans le bain à ultrasons. De l'acétone (1 volume d'acétone pour un volume de microémulsion) est ajouté petit à petit, en agitant de façon manuelle à chaque phase d'ajout. Le mélange résultant est laissé 5 à 10 minutes dans le bain à ultrasons après la fin de l'ajout.

Les particules sont ensuite isolées par ultrafiltration sur une membrane hydrophile en polyfluorure de vinylidène (PVDF) Durapore (0,22 µm; GVWP 04700) sous vide. Les particules de platine supportées sur le matériau carboné (le noir de carbone) sont lavées par filtration par cycles de 4*30 mL d'acétone, 3*30 mL d'éthanol et 4*30 mL d'eau MilliQ (avec une agitation entre chaque lavage). Les particules obtenues sont alors placées pendant 2 heures à l'étuve à une température de 135°C, pour éliminer les dernières traces de Brij® 30.

Le rendement est quantitatif.

Les particules obtenues sont analysées par analyse élémentaire attestant de la présence de carbone (à hauteur de 60%) et de platine (à hauteur de 40%), ce qui démontre que les particules de platine sont supportées sur le matériau carboné.

### EXEMPLE 4

Cet exemple illustre la préparation de particules de platine préparées selon l'exemple 3 greffées par le polymère préparé à l'exemple 2, ces particules étant ainsi greffées par des greffons de formule suivante: 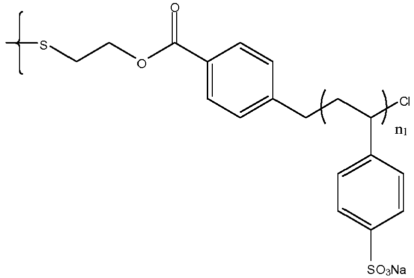 n₁ indiquant le nombre de répétition du motif pris entre parenthèses.

Pour ce faire, dans un ballon de 25 mL, sont introduites les particules préparées à l'exemple 3 et de l'hexylamine. Le ballon est placé 15 minutes dans un bain à ultrasons, afin que la suspension de particules soit homogène. Le polymère obtenu à l'exemple 2 est mis en solution dans un mélange eau/hexylamine (50/50 en volume) puis est introduit dans le ballon. L'ensemble est placé sous agitation magnétique pendant 12 heures.

Les particules de platine fonctionnalisées sont précipitées dans l'acétone puis soumises à différentes étapes de lavage (3*30 mL d'acétone, 3*30 mL d'éthanol et 3*30 mL d'eau).

Ces étapes de lavage permettent d'éliminer les traces de polymères susceptibles de ne pas s'être greffés sur les particules.

Les particules sont ensuite placées une nuit à l'étuve à 65°C.

### EXEMPLE 5

Dans cet exemple, les particules obtenues à l'exemple 4 sont soumises à différentes analyses de sorte à analyser:
- la caractérisation électrochimique de ces particules ; et
- le test en pile des particules.

### c) Caractérisation électrochimique des particules

La caractérisation de la tenue de la couronne organique a été réalisée en milieu support (argon) avec une cellule à trois électrodes. Dans cette cellule, l'électrode de référence est une électrode réversible à dihydrogène (ERH) dont le potentiel électrochimique est fixé et connu. La seconde électrode est une électrode auxiliaire appelée contre électrode (CE) constituée d'un matériau inerte, une plaque de carbone vitreux dans notre cas, et qui sert à la collection du courant. La troisième électrode est une électrode de travail (ET) sur laquelle se trouve le catalyseur étudié. Un système d'entrée et de sortie de gaz (AG/SG) est ajouté afin de travailler en atmosphère contrôlée. La mesure s'effectue par cyclage du potentiel d'électrode entre 0,05 V vs ERH et une limite supérieure de potentiel successivement égale à 1 V vs ERH (potentiel situé après le début de la réaction d'oxydation de la surface de platine, et correspondant au potentiel de la cathode d'une PEMFC à circuit ouvert), 1,1 et 1,2 V vs ERH (potentiel fortement oxydant), les résultats étant reportés sur le voltammogramme de la figure unique.

Lors des balayages successifs en passant par des potentiels d'électrode supérieurs à 1,0 V vs ERH, les courants enregistrés sont stables et caractéristiques d'une surface de platine modifiée, ce qui confirme la présence, après plusieurs cycles, de la couronne organique.

A titre comparatif, pour des particules greffées par des greffons de formule (l') telle que définie plus haut, celles-ci présentent une instabilité au-delà de 1 V vs. ERH.

L'activité catalytique et la sélectivité sont des propriétés importantes dans le choix du catalyseur.

La caractérisation des matériaux en milieu acide saturé en oxygène permet d'étudier leur comportement catalytique vis-à-vis de la réaction de réduction de l'oxygène. L'allure des voltammogrammes est équivalente à celle obtenue pour des catalyseurs du type Vulcan XC72/Pt. Pour tous les matériaux caractérisés, le nombre total d'électrons échangés est égal à 4 entre 0,7 et 0,4 V vs ERH. La réduction de l'oxygène est donc complète pour former de l'eau.

### d) Test en pile

Pour ce faire, il a été réalisé des piles comportant une membrane Nafion® NR212 et deux électrodes à diffusion de gaz (anode et cathode) chargées respectivement à l'anode et la cathode par 0,4 mg/cm² avec des particules de l'invention (Pile 1) et, à valeur comparative, avec des particules greffées par des greffons de formule (l') telle que définie ci-dessus (Pile 2).

Les électrodes à diffusion de gaz sont réalisées par simple coulée d'une encre catalytique (comprenant les particules dans un mélange éthanol/eau (3 :1)) sur un tissu suivie d'une évaporation à 50°C pendant 4 heures.

Les tests sont réalisés en monocellule de 5 cm² sous H₂/O₂ sous une pression de 3 bars, à 60°C et à 21% d'humidité.

Avec la Pile 1 de l'invention, on obtient une meilleure tension à circuit ouvert (OCV) (1 V contre 0,91 V pour la Pile 2), une meilleure activation entre 0 et 0,1 A/cm² (ce qui signifie, en d'autres termes, une mise en place plus rapide des réactions d'oxydo-réduction au sein de la pile) ainsi qu'une chute ohmique moins importante.

Dans ces conditions, la puissance maximale délivrée par la Pile 1 est de 250 mW/cm² contre 140 mW/cm² par la Pile 2, ce qui correspond à une amélioration de 64 %.

## Revendications

1. Procédé de préparation de particules comprenant un matériau apte à catalyser la réduction de l'oxygène ou l'oxydation de l'hydrogène, lesdites particules étant greffées par des greffons consistant en au moins un polymère comprenant au moins un motif répétitif styrénique porteur d'au moins un groupe conducteur de protons, ledit procédé comprenant :
a) une étape de préparation d'au moins un polymère styrénique par polymérisation ATRP d'un monomère styrénique avec un amorceur ATRP répondant à la formule (I) suivante : 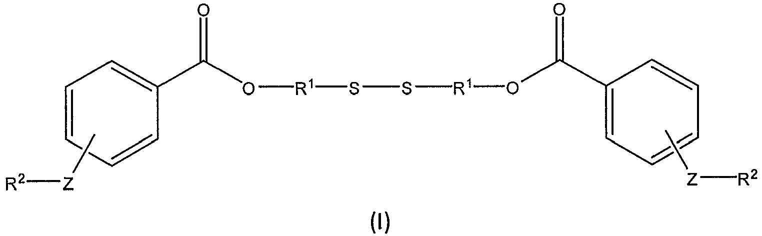 dans laquelle :
- les groupes R¹ représentent, indépendamment l'un de l'autre, un groupe espaceur organique ;
- les groupes Z représentent, indépendamment l'un de l'autre, une liaison simple ou un groupe espaceur organique ;
- les groupes R² représentent, indépendamment l'un de l'autre, un atome d'halogène ;
le polymère résultant répondant à la formule (II) suivante : 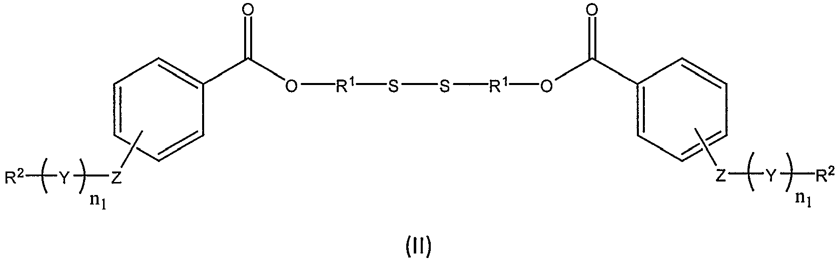 dans laquelle Y correspond au motif répétitif styrénique porteur d'au moins un groupe conducteur de protons et n₁ au nombre de répétition du motif répétitif pris entre parenthèses, les R¹, R² et Z étant tels que définis ci-dessus ;
b) une étape de mise en contact de particules comprenant un matériau apte à catalyser la réduction de l'oxygène ou l'oxydation de l'hydrogène avec le polymère obtenu en a), moyennant quoi l'on obtient des particules greffées par des greffons de formule (III) suivante : 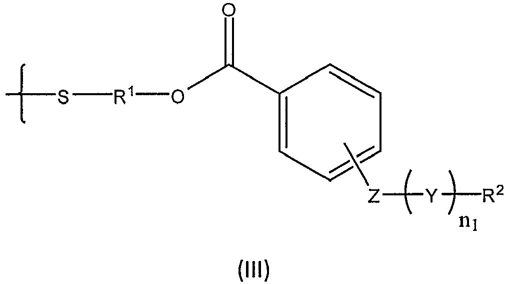 l'accolade indiquant l'endroit par lequel les greffons sont liés, de manière covalente, aux particules et les R¹, R², Z, Y et n₁ étant tels que définis ci-dessus.

2. Procédé selon la revendication 1, dans lequel les particules sont des particules métalliques.

3. Procédé selon la revendication 1 ou 2, dans lequel les particules métalliques sont des particules comprenant un métal noble, tel que le platine, le ruthénium, le palladium et des mélanges de ceux-ci.

4. Procédé selon l'une quelconque des revendications précédentes, dans lequel R¹ et Z représentent, indépendamment l'un de l'autre, un groupe alkylène.

5. Procédé selon l'une quelconque des revendications précédentes, dans lequel les groupes -Z-R² sont situés en position *para* par rapport aux groupes -COO-.

6. Procédé selon l'une quelconque des revendications précédentes, dans lequel le groupe conducteur de protons est un groupe acide sulfonique -SO₃H, un groupe acide carboxylique -CO₂H ou un groupe acide phosphonique -PO₃H₂, ces groupes pouvant être présents éventuellement sous forme de sels.

7. Procédé selon l'une quelconque des revendications précédentes, dans lequel le monomère styrénique est un monomère de formule (V) suivante : 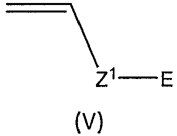 dans laquelle :
- Z¹ correspond à un groupe phénylène ; et
- E correspond à un groupe conducteur de protons, éventuellement sous forme d'un sel.

8. Procédé selon l'une quelconque des revendications précédentes, dans lequel les particules sont, en outre, liées à un matériau carboné.

9. Procédé selon la revendication 8, comprenant, en outre, avant l'étape a) et/ou b), une étape de préparation de particules comprenant un matériau apte à catalyser la réduction de l'oxygène ou l'oxydation de l'hydrogène.

10. Particules susceptibles d'être obtenues par un procédé selon l'une quelconque des revendications 1 à 9, lesdites particules comprenant un matériau apte à catalyser la réduction de l'oxygène ou l'oxydation de l'hydrogène, lesdites particules étant greffées par des greffons de formule (III) suivante : 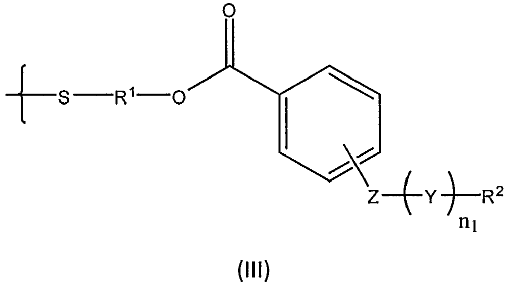 dans laquelle R¹, R², Z, Y et n₁ répondent à la même définition que celles de la revendication 1.

11. Particules selon la revendication 10, qui sont des particules en platine.

12. Electrode comprenant des particules telles que définies selon la revendication 10 ou 11.

13. Pile à combustible comprenant au moins un assemblage électrode-membrane-électrode, dans lequel au moins une de ses électrodes est une électrode telle que définie à la revendication 12.

14. Polymère répondant à la formule (II) suivante : 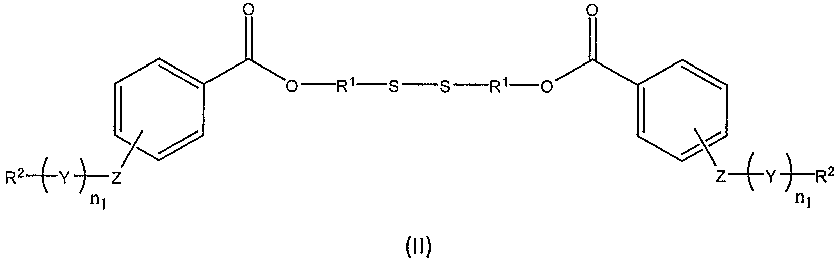 dans laquelle les R¹, R², Z, Y et n₁ répondent à la même définition que celles de la revendication 1.

15. Amorceur ATRP répondant à la formule (I) suivante : 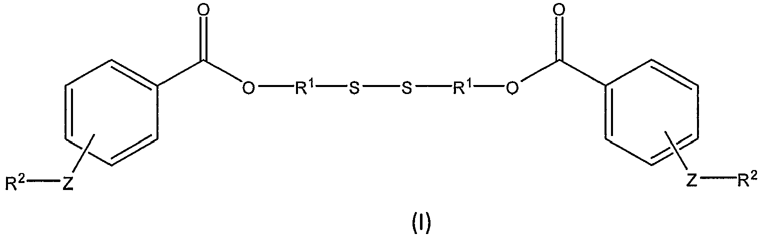 dans laquelle les R¹, R², Z sont tels que définis à la revendication 1.

## Patentansprüche

1. Verfahren zur Herstellung von Parikeln, umfassend ein Material, das dazu ausgelegt ist, die Reduktion von Sauerstoff oder die Oxidation von Wasserstoff zu katalysieren, wobei die Partikel durch Pfröpflinge gepropft sind, die aus wenigstens einem Polymer bestehen, umfassend wenigstens ein sich wiederholendes Styrolmotiv, das Träger von wenigstens einer protonenleitenden Gruppe ist, wobei das Verfahren Folgendes umfasst:
a) einen Schritt der Herstellung wenigstens eines Styrolpolymers durch ATRP-Polymerisation eines Styrolmonomers mit einem ATRP-Initiator, der der nachfolgenden Formel (I) genügt: 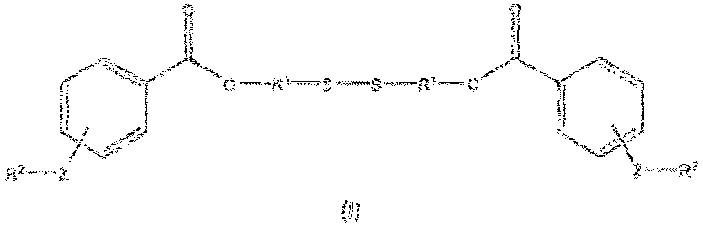 wobei:
- die Gruppen R¹ unabhängig voneinander eine organische Abstandshaltergruppe repräsentieren;
- die Gruppen Z unabhängig voneinander eine Einfachbindung oder eine organische Abstandshaltergruppe repräsentieren;
- die Gruppen R² unabhängig voneinander ein Halogenatom repräsentieren;
wobei das resultierende Polymer der nachfolgenden Formel (II) genügt: 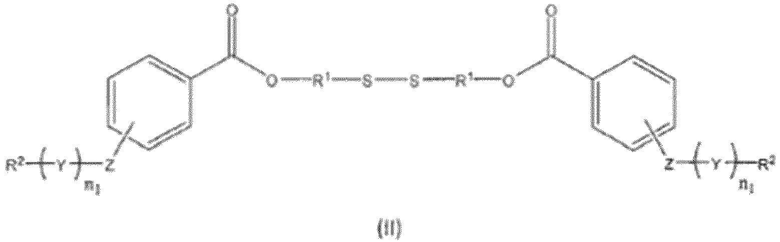 wobei Y dem sich wiederholenden Styrolmotiv entspricht, das Träger von wenigstens einer protonenleitenden Gruppe ist, und n₁ der Wiederholungszahl des in Klammern gesetzten sich wiederholenden Motivs, wobei die R¹, R² und Z wie oben definiert sind;
b) einen Schritt des Inkontaktbringens von Partikeln, umfassend ein Material, das dazu ausgelegt ist, die Reduktion von Sauerstoff oder die Oxidation von Wasserstoff zu katalysieren, mit dem in a) erhaltenen Polymer, wodurch man Partikel, gepfropft durch Pfröpflinge der nachfolgenden Formel (III) erhält: 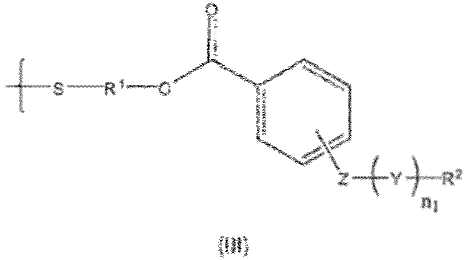 wobei die Akkolade den Ort angibt, an dem die Pfröpflinge in kovalenter Weise mit den Partikeln verbunden sind, und die R¹, R², Z, Y und n₁ wie oben definiert sind.

2. Verfahren nach Anspruch 1, bei dem die Partikel Metallpartikel sind.

3. Verfahren nach Anspruch 1 oder 2, bei dem die Metallpartikel Partikel sind, die ein Edelmetall umfassen, beispielsweise Platin, Ruthenium, Palladium und deren Mischungen.

4. Verfahren nach einem der vorhergehenden Ansprüche, bei dem R¹ und Z unabhängig voneinander eine Alkylengruppe repräsentieren.

5. Verfahren nach einem der vorhergehenden Ansprüche, bei dem die Gruppen -Z-R² an der Para-Position bezogen auf die Gruppen -COO- angeordnet sind.

6. Verfahren nach einem der vorhergehenden Ansprüche, bei dem die protonenleitende Gruppe eine Sulfonsäuregruppe -SO₃H, eine Carboxylsäuregruppe -CO₂H oder eine Phosphonsäuregruppe -PO₃H₂ ist, wobei diese Gruppen gegebenenfalls in Form von Salzen vorhanden sein können.

7. Verfahren nach einem der vorhergehenden Ansprüche, bei dem das Styrolmonomer ein Monomer der nachfolgenden Formel (V) ist: 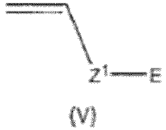 wobei:
- Z¹ einer Phenylengruppe entspricht; und
- E einer protonenleitenden Gruppe entspricht, gegebenenfalls in Form eines Salzes.

8. Verfahren nach einem der vorhergehenden Ansprüche, bei dem die Partikel ferner mit einem Kohlenstoffmaterial verbunden sind.

9. Verfahren nach Anspruch 8, ferner umfassend vor dem Schritt a) und/oder b) einen Schritt der Herstellung von Partikeln, umfassend ein Material, das dazu ausgelegt ist, die Reduktion des Sauerstoffs oder die Oxidation des Wasserstoffs zu katalysieren.

10. Partikel, die durch ein Verfahren nach einem der Ansprüche 1 bis 9 erhältlich sind, wobei die Partikel ein Material umfassen, das dazu ausgelegt ist, die Reduktion des Sauerstoffs oder die Oxidation des Wasserstoffs zu katalysieren, wobei die Partikel durch Pfröpflinge der nachfolgenden Formel (III) gepfropft sind: 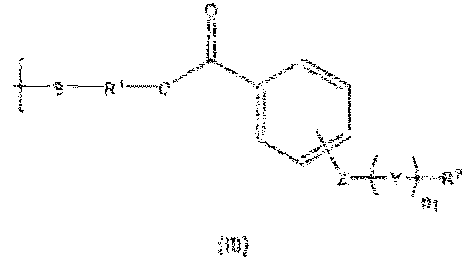 wobei R¹, R², Z, Y und n₁ der gleichen Definition wie jene des Anspruchs 1 genügen.

11. Partikel nach Anspruch 10, die Partikel aus Platin sind.

12. Elektrode, umfassend Partikel wie in Anspruch 10 oder 11 definiert.

13. Brennstoffzelle, umfassend wenigstens eine Anordnung Elektrode-Membran-Elektrode, wobei wenigstens eine ihrer Elektroden eine Elektrode wie in Anspruch 12 definiert ist.

14. Polymer, das der nachfolgenden Formel (II) genügt: 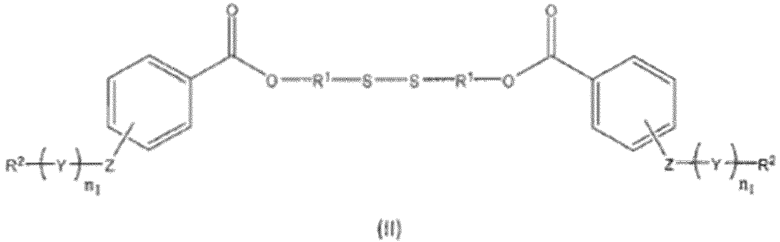 wobei die R¹, R², Z, Y und n₁ der gleichen Definition wie jene des Anspruchs 1 genügen.

15. ATRP-Initiator, der der nachfolgenden Formel (I) genügt: 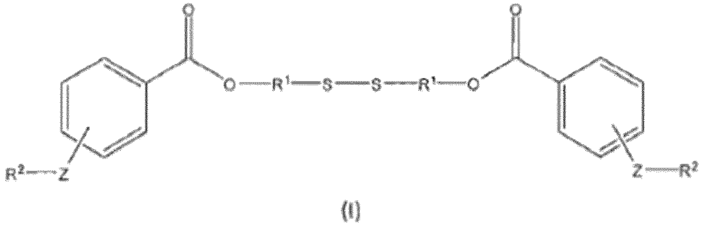 wobei die R¹, R², Z wie in Anspruch 1 definiert sind.

## Claims

1. Method for preparing particles comprising a material able to catalyse oxygen reduction or hydrogen oxidation, said particles being grafted with grafts composed of at least one polymer comprising at least styrene repeating unit carrying at least one proton-conducting group, said method comprising:
a) a step to prepare at least one styrene polymer via ATRP polymerisation of a styrene monomer with an ATRP initiator meeting following formula (I): 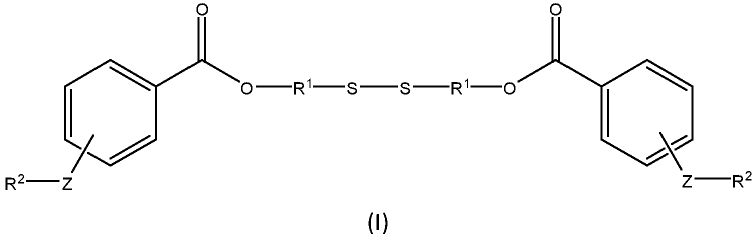 where:
- the R¹ groups are each independently an organic spacer group;
- the Z groups are each independently a single bond or an organic spacer group;
- the R² groups are each independently a halogen atom;
the resulting polymer meeting following formula (II): 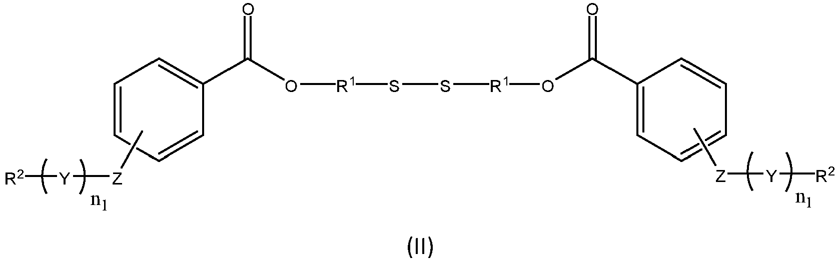 where Y corresponds to the styrene repeating unit carrying at least one proton-conducting group and n₁ to the number of repeats of the repeating unit between round brackets, R¹, R² and Z being such as defined above;
b) a step to place the particles comprising a material able to catalyse oxygen reduction or hydrogen oxidation in contact with the polymer obtained at a), after which particles are obtained grafted with grafts of following formula (III): 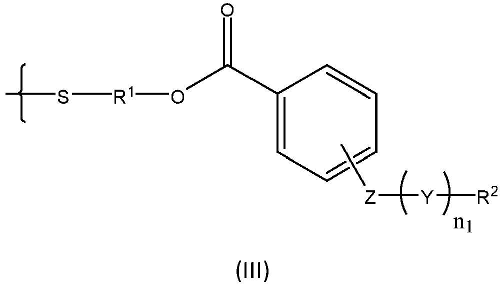 the brace indicating the point at which the grafts are covalently bonded to the particles, and R¹, R², Z, Y and n₁ being such as defined above.

2. The method according to claim 1, wherein the particles are metal particles.

3. The method according to claim 1 or 2, wherein the metal particles are particles comprising a noble metal such as platinum, ruthenium, palladium and mixtures thereof.

4. The method according to any of the preceding claims, wherein R¹ and Z are each independently an alkylene group.

5. The method according to any of preceding claims, wherein the -Z-R² groups are at *para* position relative to the -COO- groups.

6. The method according to any of the preceding claims, wherein the proton-conducting group is a sulfonic acid group-SO₃H, carboxylic acid group -CO₂H or phosphonic acid group -PO₃H₂, these groups optionally being present in salt form.

7. The method according to any of the preceding claims, wherein the styrene monomer is a monomer of following formula (V): 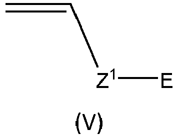 where:
- Z¹ corresponds to a phenylene group; and
- E corresponds to a proton-conducting group, optionally in salt form.

8. The method according to any of the preceding claims, wherein the particles are additionally bound to a carbon material.

9. The method according to claim 8 also comprising before step a) and/or b), a step to prepare particles comprising a material able to catalyse oxygen reduction or hydrogen oxidation.

10. Particles able to be obtained with a method according to any of claims 1 to 9, said particles comprising a material able to catalyse oxygen reduction or hydrogen oxidation, said particles being grafted with grafts of following formula (III): 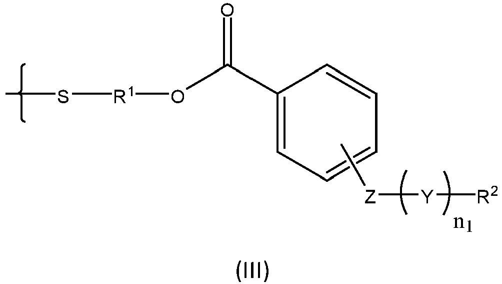 where R¹, R², Z, Y and n₁ meet the same definition as those given in claim 1.

11. The particles according to claim 10, that are platinum particles.

12. Electrode comprising particles such as defined in any of claims 10 to 11.

13. Fuel cell comprising at least one electrode-membrane-electrode assembly, wherein at least one of the electrodes is an electrode such as defined in claim 12.

14. Polymer meeting following formula (II): 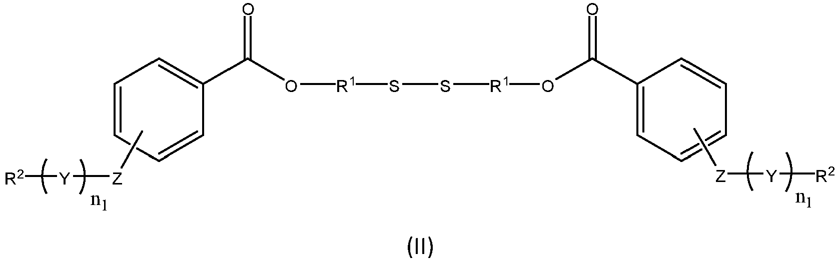 where R¹, R², Z, Y and n₁ meet the same definition as those given in claim 1.

15. ATRP initiator meeting following formula (I): 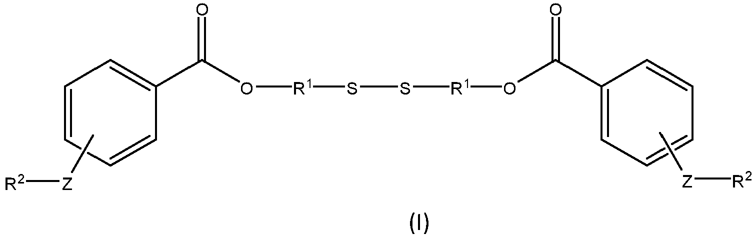 where R¹, R², Z are such as defined in claim 1.
